Europäisches Patentamt

European Patent Office

Office européen des brevets

(11) Veröffentlichungsnummer: **0 160 783**
**B2**

(12) **NEUE EUROPÄISCHE PATENTSCHRIFT**

(45) Veröffentlichungstag der neuen Patentschrift:
02.01.91

(51) Int. Cl.⁵: **B 41 M 5/00,** B 01 J 13/00

(21) Anmeldenummer: 85101357.3

(22) Anmeldetag: 08.02.85

(54) Verfahren zum Einkapseln gelöster Reaktionspartner von Farbreaktionssystemen, die danach erhältlichen Kapseln sowie deren Verwendung in Farbreaktionspapieren.

(30) Priorität: 09.03.84 DE 3408745
19.11.84 DE 3442268

(43) Veröffentlichungstag der Anmeldung:
13.11.85 Patentblatt 85/46

(45) Bekanntmachung des Hinweises auf die
Patenterteilung:
15.06.88 Patenblatt 88/24

(45) Bekanntmachung des Hinweises auf die
Entscheidung über den Einspruch:
02.01.91 Patentblatt 91/01

(84) Benannte Vertragsstaaten:
AT BE CH DE FR GB IT LI LU NL SE

(56) Entgegenhaltungen:
DE-A-2 447 103        FR-A-2 235 804
DE-A-3 346 601        US-A-3 578 844
DE-B-2 306 454        US-A-3 940 275
DE-C-2 134 236        US-A-4 333 849
FR-A-2 083 121

Römpps Chemie-Lexikon, 8. Auflage, 1981, S.
1323-1326

(73) Patentinhaber: Papierfabrik August Koehler AG
Postfach 1245
D-7602 Oberkirch (DE)

(72) Erfinder: Pietsch, Günther
Burgwedeler Strasse 150
D-3004 Isernhagen HB (DE)
Erfinder: Hartmann, Claus
Kirchhöffner Strasse 6
D-3000 Hannover 91 (DE)

(74) Vertreter: Hagemann, Heinrich, Dr. et al
Patentanwälte Hagemann & Kehl Postfach
860329
D-8000 München 86 (DE)

EP 0 160 783 B2

Courier Press, Leamington Spa, England.

**Beschreibung**

Die Erfindung betrifft ein Verfahren zum Einkapseln einer in einer wässrigen Emulsion vorliegenden Lösung eines Reaktionspartners von Farbreaktionssystemen durch übliche Mikroeinkapselungsverfahren, wobei der Reaktionspartner zunächst in einem Lösungsmittel mit für ihn gutem Lösungsvermögen gelöst und der hierdurch erhaltenen Lösung ein Nichtlöser, der den Reaktionspartner allenfalls unwesentlich löst beigemischt und diese Lösung durch Mischen mit einer wässrigen Phase in eine wässrige Emulsion überführt und hiermit das Mikroeinkapselungsverfahren durchgeführt wird.

Bei handelsüblichen Farbreaktionspapieren, wie sie z.B. in der DE—A—2 151 178, der US—A—3 418 250, der US—A—3 016 308 und US—A—4 333 849 sowie insbesondere in der DE—B—2 134 326, die den obigen Stand der Technik wiedergibt, beschrieben werden, sind die Farbbildner, z.B. in Form von Kristallviolettlakton, die beim Druckvorgang mit einem sauren Reaktionspartner eine Farbmarkierung liefern, in Mikrokapseln eingeschlossen. In dem Fall, daß der saure Reaktionspartner löslich ist, kann auch dieser eingekapselt sein. Durch die Einkapselung soll die unerwünschte frühzeitige Farbreaktion der beiden Reaktionspartner ausgeschlossen sein. Die bekannten Farbbildner stellen vorrangig klassische aromatische Systeme dar. Sie werden daher auch in aromatischen Lösungsmitteln gelöst und einem Einkapselungsverfahren unter Bildung einer relativ harten Kapselwand unterzogen. Die für aromatische Farbbildner bekannten aromatischen Lösungsmittel, wie z.B. alkylierte Biphenyle, insbesondere Butylbiphenyl, Isopropylbiphenyl, Amylbiphenyl, Hexylbiphenyl und Diisopropylbiphenyl, sowie die alkylierten Naphthaline, Terphenyle und deren Derivate, insbesondere teilweise hydrierte Terphenyle, Diarylmethan und dessen Derivate sowie Diaryläthan und dessen Derivate, stellen relativ schwierig herzustellende bzw. teuere Substanzen dar. Es hat nicht an Versuchen gefehlt, diesem Nachteil Rechnung zu tragen, indem z.B. in dem Falle, daß Isopropylbiphenyl, gegebenenfalls mit einem Anteil an Polyisopropylbiphenyl und Biphenyl, als gut lösendes Lösungsmittel eines aromatischen Farbbildners herangezogen wird, der erhaltenen Farbbildnerlösung ein hochsiedendes gesättigtes aliphatisches Kohlenwasserstofföl, z.B. eines Siedebereichs von 160 bis 288°C, demzufolge ein billiges aliphatisches Lösungsmittel, als Verdünnungsmittel beigemischt wird.

Die Verwendung von aliphatischen Verdünnungsmitteln erfolgt deswegen, weil sie im allgemeinen wesentlich billiger als aromatische Lösungsmittel, wie Isopropylbiphenyl, sind. Die Zugabe des Verdünnungsmittels setzt die Löslichkeit des Farbbildners in dem Lösungsmittelgemisch herab. Wird als Farbbildner Kristallviolettlakton verwendet, dann können im Hinblick auf die praktischen Erfordernisse (ausreichende Löslichkeit, optimale Farbbildung etc.) Isopropylbiphenyl und das billige aliphatische Kohlenwasserstofföl allenfalls in einer Mischung eines Gewichtsverhältnisses von etwa 2:1 eingesetzt werden. Der billige aliphatische Anteil macht daher höchstens etwa 33% der Gesamtmischung aus.

Bemühungen, den Anteil des billigen aliphatischen Nichtlösers in der Mischung mit dem gut lösenden Lösungsmittel anzuheben, schlugen bisher fehl, da die Erhöhung des Anteils an Nichtlöser stets dazu führte, daß der gelöste Farbbildner in unerwünschter Weise zumindest teilweise in fester Form ausfiel und die angefallene Dispersion (mit suspendierten festen Teilchen) zum Einkapseln anhand üblicher Einkapselungsverfahren nicht mehr brauchbar war. So zeigte es sich, daß dann, wenn derartige Suspensionen eingekapselt wurden, die erhaltenen Kapseln in Farbreaktionssystem nicht zu den angestrebten Effekten, insbesondere zu der gewünschten Farbintensität, führten. So hatten Versuche gezeigt, daß eine Lösung von Kristallviolettlakton in einem Gemisch aus 15% eines aromatischen Lösungsmittels in Form von Diisopropylnaphthalin, teilweise hydriertem Terphenyl oder Isopropylbiphenyl und aus 85% eines nicht-lösenden aliphatischen Kohlenwasserstoffs den Farbbildner innerhalb kürzester Zeit weitestgehend ausfallen ließ. Wurden dann dennoch mit einem derartigen dispersen Medium Kapseln für Farbreaktionspapiere hergestellt, dann zeigte es sich beim späteren Schreibvorgang, daß der ausgefällte Hauptteil des Farbbildners dem Farbreaktionsmechanismus entzogen war, so daß eine nicht befriedigende Farbintensität erhalten wurde.

Die Bemühungen, billige nicht-aromatische Nichtlöser neben den aromatischen Lösungsmitteln bei der Einkapselung von Farbbildnerlösungen in größeren Mengenanteilen einzusetzen, waren daher im Stand der Technik nicht weiter vorangetrieben worden. Vielmehr ging man davon aus, daß bei Untersuchungen in dieser Richtung kein Erfolg mehr zu erwarten war.

Überraschenderweise hat es sich aber gezeigt, daß die gewünschten Farbreaktionen des Farbbildners und seines sauren Reaktionspartners in Farbreaktionssystemen dennoch in dem gewünschten Umfange ablaufen, wenn z.B. ein billinger Nichtlöser für den Farbbildner und/oder seinen sauren Reaktionspartner in einer solchen Menge eingesetzt wird, daß sogar eine stark übersättigte Lösung der Reaktionspartner anfällt, sofern eine solche übersättigte Lösung unmittelbar nach ihrer Herstellung und demzufolge in frischer Form unverzüglich dem Emulgier- und dem Einkapselungsvorgang unterworfen wird. Werden derartig gewonnene Kapseln in Farbreaktionssystemen eingesetzt, dann laufen die beim Druckvorgang eintretenden Farbreaktionen überraschenderweise unbeeinträchtigt ab, nämlich so ab, als wenn in den Kapseln kein übersättigtes System, sondern z.B. ein reines nicht-gesättigtes aromatisches System eingeschlossen gewesen wäre.

Gegenstand der Erfindung ist demzufolge ein Verfahren zum Einkapseln eines in einer wässrigen Emulsion vorliegenden Lösung eines Reaktionspartners von Farbreaktionssystemen, durch übliche Mikroeinkapselungsverfahren, wobei der Reaktionspartner zunächst in einem Lösungsmittel mit für ihn

2

gutem Lösungsvermögen gelöst und der hierdurch erhaltenen Lösung ein Nichtlöser, der den Reaktionspartner allenfalls unwesentlich löst, beigemischt und diese Lösung durch Mischen mit einer wässrigen Phase in eine wässrige Emulsion überführt und hiermit das Mikroeinkapselungsverfahren durchgeführt wird, daß dadurch gekennzeichnet ist, daß der mit dem Lösungsmittel guten Lösungsvermögens erhaltenen Lösung unter schnellem Mischen ein Nichtlöser in einer eine übersättigte Lösung einstellenden Menge beigemischt und die übersättigte Lösung unmittelbar denach unter schnellem Mischen in der wässrigen Phase emulgiert wird und danach eingekapselt wird, bevor eine vorzeitige störende Auskristallisation des gelösten Reaktionspartners eingetreten ist.

Daß das oben wiedergegebene erfindungsgemäße Verfahren zu dem bereits angesprochenen Erfolg führt, war insbesondere im Hinblick auf den sich aus der DE—B—2 306 454 ergebenden Stand der Technik nicht zu erwarten. Während anhand der vorliegenden Erfindung ein Farbbildner in eine übersättigte Lösung aus gutem Löser und Nichtlöser überführt und diese der Emulgierung in einer wässrigen Phase unterworfen wird, verlangt die DE—B—2 306 454 zwingend "sicherzustellen, daß die Lösung nicht übersättigte wurde", um das unerwünschte Ausfällen des Farbbildners aus dieser übersättigten Lösung zu vermeiden.

Das erfindungsgemäße Verfahren ist von besonderer Bedeutung für die Einkapselung von Farbbildnern und Farbreaktionssystemen, insbesondere Farbreaktionspapieren, bei denen sich Farbbildner und saurer Reaktionspartner räumlich voneinander getrennt auf der Oberfläche zweier verschiedener, sich berührender Papiere oder auf der Oberfläche eines einzigen Papiers (autogene Papiere) befinden.

Bei dem basischen Farbbildner handelt es sich beispielsweise um folgende Verbindungen: Diarylphthalid, wie 3,3-Bis(p-dimethylaminophenyl)-6-dimethylaminophthalid (Kristallviolettlakton) und 3,3-Bis-(p-dimethylaminophenyl)-phthalid (Malachitgrünlakton), Leukauramine, wie N-Halogenphenyl-, insbesondere N-(2,5-Dichlorphenyl)-leukauramin, Acylauramin, wie N-Benzoylauramin und N-Acetylauramin, N-Phenylauramin, α-,β-ungesättigte Arylketone, wie Dianisylidenaceton, Dibenzylidenaceton und Anisylidenaceton, basische Monoazofarbstoffe, wie p-Dimethylaminoazobenzolo-carbonsäure (Methylrot), 4-Amino-azobenzol und 4-Phenylazo-1-naphthalinamin, Rhodamin-B-Laktam, wie N-(p-Nitrophenyl)rhodamin-B-laktam, Polyarylcarbinole, wie Bis(p-dimethylaminophenyl)-methanol, Kristallviolettcarbinol, Fluorane, wie Monoaminofluoran, Diaminofluoran und deren Derivate, und Spirane, wie Benzo- oder Naphtho-spiropyran-derivate. Hierbei handelt es sich um sogenannte Primärfarbbildner, die bei der gewünschten Farbreaktion praktisch momentan durch die Reaktion mit dem sauren Reaktionspartner eine Farbe bilden. Es können allerdings zusätzlich auch Sekundärfarbbildner, die die Farbreaktion verzögern und einem schnellen Verbleichen der durch den Primärfarbbildner gebildeten Färbung entgegenwirken, herangezogen werden. Ein Beispiel hierfür ist das N-Benzoylleukomethylenblau.

In der Farbreaktionstechnik, insbesondere der Farbreaktionspapiertechnik, ist es in Einzelfällen erwünscht, auch den Reaktionspartner der Farbbildner gelöst einzukapseln. Für die üblichen sauren Reaktionspartner wird ein aromatisches Lösungsmittel eingesetzt. Zu den Reaktionspartnern zählen saure Phenolharze, insbesondere Phenylaldehydharze, wie Phenol/Formaldehyd-Harze. Hierunter werden die p-Alkylphenolharze bevorzugt, die z.B. in der DE—A—1 934 457 beschrieben werden. Die p-Alkylgruppe weist vorzugsweise 1 bis 12 Kohlenstoffatomen auf.

Es können allerdings auch sogenannte "chelatisierte" oder "zinkmodifizierte" Phenolharze eingekapselt werden, bei denen die phenolischen Protonen durch Zink ersetzt sind. Derartige Phenolharze werden beispielsweise in der US—A—3 732 120 beschrieben. Folgende Verbindungen kommen ebenfalls in Frage, worunter sich auch Verbindungen mit einer sauren Carboxylgruppierung (auch in Form einer Anhydrid-Struktur) befinden: Phenolacetylen-Polymere, Maleinsäureharze, teilweise oder vollständig hydrolysierte Styrolmaleinsäureanhydrid-Mischpolymerisate und Ethylenmaleinsäureanhydrid-Mischpolymerisate, Carboxypolymethylen und ganz oder teilweise hydrolysiertes Phenylmethylenethermaleinsäureanhydrid-Mischpolymerisat, p-Halogenphenol/Formaldehyd-Harze sowie Harze vom Typ des Bisphenols A. Darüber hinaus eigenen sich aber insbesondere auch saure monomere phenolische Verbindungen, wie z.B. Bis-(p-Hydroxy-phenyl)-propan, Naphtholderivate, p-Hydroxybenzoesäureester und Salicylsäurederivate.

Die oben beschriebenen sauren Reaktionspartner von Farbbildnern eignen sich im Rahmen der Erfindung besonders bevorzugt für folgende Farbbildner: Kristallviolettlakton, orange, rot und grün/olive bzw. schwarz reagierende Fluorane und Benzo- und Naphtho-spiran-Verbindungen.

Wenn im Rahmen der Erfindung von "Lösungsmittel guten Lösungsvermögens" gesprochen wird, dann bezieht sich dieses Lösungsvermögen auf den jeweils einzukapselnden Reaktionspartner. Wird der Reaktionspartner von einem solchen Lösungsmittel in einer Menge gelöst, die zu einer zufriedenstellend konzentrierten und einzukapselnden Lösung führt, dann wird von einem "guten Lösungsvermögen" gesprochen. Selbstverständlich muß ein solches Lösungsmittel in dem herzustellenden System inerten Charakter haben, d.h. es darf sich weder selbst chemisch verändern, noch die jeweils gelöste chemische Verbindung verändern. Zumindest müßten gegebenenfalls in Erscheinung tretende Veränderungen vernachlässigbar sein. Der für die Zwecke der Erfindung eingesetzte "Nichtlöser" ist zwar im oben angesprochenen Sinne ebenfalls inert, würde jedoch allein keine ausreichend konzentrierte Lösung des jeweils zu lösenden Reaktionspartners bilden. Vielmehr würde er diesen allenfalls unwesentlich, z.B. etwa 0,1% bis 0,3% oder weniger lösen, was bezüglich der Konzentration der einzukapselnden Lösung an Reaktionspartnern praktisch unbedeutend ist. Das würde beispielsweise im Falle der Mehrzahl der bekannten Farbbildner sowie deren sauren Reaktionspartnern, die regelmäßig besonders gut in aromatischen Systemen löslich sind, bedeuten, daß unpolare aliphatische Verbindungen unter den Begriff "Nichtlöser" fallen, die tatsächlich diese Reaktionspartner unter praktischen Gesichtspunkten nicht lösen. Im Ergebnis sind daher die Begriffe "Nichtlöser" sowie "Lösungsmittel mit gutem Lösungsvermögen" stets im Hinblick auf ihr Lösungsvermögen gegenüber den zu lösenden Verbindungen in Form der genannten Reaktionspartner zu sehen. Auf jeden Fall unterscheidet sich ihr diesbezügliches Lösungsvermögen so deutlich, daß auch unter diesem Gesichtspunkt die hier verwendeten Definitionen gerechtfertigt sind.

Für die Zwecke der Erfindung haben sich als Lösungsmittel guten Lösungsvermögens für die jeweiligen Reaktionspartner von Farbreaktionssystemen insbesondere aromatische Lösungsmittel als vorteilhaft erwiesen. Hierzu zählen insbesondere alkylierte Biphenyle, alkylierte Naphthaline, wobei der Alkylrest vorzugsweise 3 bis 10 Kohlenstoffatome enthält und es sich insbesondere um den Isopropyl-, Butyl-, Amyl-, Hexyl- und Diisopropylrest handelt, Dialkylphthalate, insbesondere Dioctylphthalat, aber auch einfache aromatische Verbindungen, wie Benzol, Alkylbenzole (z.B. Methylbenzol, Ethylbenzol, Propylbenzol, Isopropylbenzol, Amylbenzol und Hexylbenzol) sowie Halogenbenzole, wie Chlorbenzol. Als nicht-aromatische Verbindungen, die ebenfalls im Sinne der Erfindung Lösungsmittel guten Lösungsvermögens darstellen, können insbesondere chlorierte Paraffine angegeben werden.

Von besonderer Bedeutung sind hierunter die chlorierten Paraffine, die beispielsweise in der GB—B—1 296 477 beschrieben werden. Danach sind chlorierte geradkettige Paraffine mit 6 bis 18 Kohlenstoffatomen und einem Chlorierungsgrad von 20 bis 60 Gew.-% als Lösungsmittel von Farbbildnern geeignet. Bevorzugt werden hierunter diejenigen chlorierten Paraffine mit 12 bis 14 Kohlenstoffatomen und einem Chlorierungsgrad von 40 bis 42 Gew.-%.

Erfindungsgemäß läßt sich eine Vielzahl von Nichtlösern für die jeweiligen Reaktionspartner heranziehen, insbesondere nicht-aromatische Lösungsmittel, die entweder in der Natur in großen Mengen verkommen und damit ballig sind. bzw. einfach und daher billig hergestellt werden können. Hierzu zählen insbesondere aliphatische und cycloaliphatische Verbindungen. Die aliphatischen und cycloaliphatischen Erdölbestandteile spielen dabei eine besondere Rolle, insbesondere Rohbenzin (Gasolin) bzw. seine Teilfraktionen in Form von Petrolether, Leichtbenzin, Ligroin (Lackbenzin), Schwerbenzin, Leuchtöl (Kerosin), d.h. die zweite Hauptfraktion des einer fraktionierten Destillation unterworfenen Erdöls, das Paraffinkohlenwasserstoffs mit 9 bis etwa 20 Kohlenstoffatomen enthält, sowie auch Gasöl (Dieselöl, Heizöl) als dritte Hauptfraktion der Destillation, das sich aus Paraffinen mit 12 bis 18 Kohlenstoffatomen zusammensetzt und in Dieselmotoren oder für Heizzwecke Verwendung findet.

Auch Erdgasbenzin ist geeignet, das im Erdgas vorhandene Benzingesanteile darstellt und durch Komprimieren oder durch Absorption in Öl aus dem Gas entfernt wird.

Die oben genannten aliphatischen Erdölfraktionen gehen auf ein Erdöl zurück, das hauptsächlich geradkettige Paraffine enthält. Daneben gibt es auch Erdöle (wie das sowjetische Naphtha), das bis zu 80% aus cyclischen Kohlenwasserstoffen (Naphthene) besteht. Die flüssigen Naphthenfraktionen lassen sich ebenfalls mit Vorteil für die Zwecke der Erfindung einsetzen. Hierzu zählen als wichtigste Vertreter Cyclopentan und Cyclohexan sowie deren Alkylderivate.

Ferner kommen auch Erdölfraktionen von solchen Erdölen in Frage, die bezüglich ihrer Zusammensetzung eine Mittelstellung zwischen den "paraffinischen" und den "naphthenischen" Erdölen einnehmen.

Als besonders billige nicht-aromatische Lösungsmittel können folgende Handelsprodukte beispielhaft angegeben werden: Exxsol[R] D 80, Exxsol[R] D 180/210, Exxsol[R] D 140—170, Isopar[R] L, Isopar[R] M, Lösungsmittel OP (sämtlich von Esso), Shellsol[R] TD, Shellsol[R] K, Shellsol[R] H, Sinarol[R] II, Flavex[R] Öl 909, Catenex Öl 913 und Risella Öl G05 (sämtlich von Shell). Hierunter sind Exxsol[R] D 80 bzw. Exxsol[R] D 100 besonders bevorzugt.

Die Erfindung erweist sich regelmäßig dann von besonderem Nutzen, wenn das Mischungsverhältnis Nichtlöser/Lösungsmittel guten Lösungsvermögens, insbesondere in Form eines aromatischen Lösungsmittels, mehr als 1:1 (Gewichtsverhältnis), insbesondere mehr als 2:1 oder gar mehr als 3:1 beträgt. So hat es sich in der Praxis überraschenderweise gezeigt, daß der Anteil des Nichtlösers sogar etwa 85 Gew.-% und in Einzelfällen auch mehr als 85 Gew.-% des gesamten Lösungssystems ausmachen kann. Das bedeutet, daß der Preis des Gesamtsystems im wesentlichen durch den billigen Nichtlöser bestimmt wird. Dies ist der besondere Wert der Erfindung. Für das erfindungsgemäße Verfahren ist es entscheidend, daß die Herstellung des Lösungssystems Nichtlöser/Lösungsmittel guten Lösungsvermögens möglichst schnell erfolgt und diese frisch hergestellte übersättigte oder gar stark übersättigte Lösung unverzüglich, zumindest vor Eintreten wesentlicher Kristallisationsvorgänge, die unerwünscht und störend sind, dem Emulgierungsvorgang bzw. dem Einkapselungsverfahren unterworfen wird. Erfolgt die Einkapselung aus einem solchen Lösungssystem, dann werden Kapseln erhalten, die bezüglich ihrer Eigung in Farbreaktionssystemen den bekannten Kapseln, die nicht aus übersättigten Systemen hergestellt werden, gleichwertig sind.

Die Erfindung ist nicht auf spezielle Einkapselungsverfahren eingeschränkt. Vielmehr können die bekannten Einkapselungsverfahren herangezogen werden, die im allgemeinen eine ausreichend schnelle Einkapselung des frisch gebildeten übersättigten Lösungssystems des Farbbildners bzw. seines sauren Reaktionspartners in Emulsionsform gewährleisten. Dabei ist im allgemeinen die Ausbildung einer, wenn auch noch flüssigen Kapselumhüllung innerhalb von wenigen s bis wenigen Minuten abgeschlossen. Die Einkapselung kann jedoch auch in einem zeitlichen Rahmen von nur ca. 2 Min. abgeschlossen sein. Die nachfolgenden Maßnahmen, wie z.B. die Härtung der Kapselwand, sind für die Erfindung nicht von kritischer Bedeutung.

Für die Zwecke der Erfindung können zur Einkapselung der oben beschriebenen Lösungen der Reaktionspartner von Farbreaktionssystemen mit Vorteil Koazervationsverfahren herangezogen werden. Gleichermaßen effektiv sind jedoch auch solche Verfahren, die nicht auf dem Koazervierungsprinzip beruhen. Geeignete Verfahren werden nachfolgend detailliert erläutert.

Das Koazervationsverfahren läuft beispielsweise wie folgt ab: zunächst stellt man eine wässrige zirka 50°C warme Lösung aus ionisierbarem hydrophilen Kolloidmaterial (insbesondere Gelatine, Gummiarabicum, CMC, Alginat oder Casein) her, wobei mindestens zwei elektrisch gegenpolig aufladbare Kolloide ausgewählt werden. Bei der Verwendung von Gelatine einerseits und z.B. Gummiarabicum andererseits liegen oberhalb des isoelektrischen Punktes der Gelatine (z.B. pH 8) gleichnamig elektronegativ geladene Kolloidionen vor. Die einzukapselnde Lösung des Farbbildners wird nunmehr in dieser wässrigen Kolloidlösung emulgiert, wobei sich eine Emulsion von Typ Öl-in-Wasser bildet. Anschließend wird der pH-Wert auf zirka 3,8 unter gleichzeitiger Verdünnung der Emulsion mit Wasser gesenkt, indem zu der Emulsion 50°C warme, stark verdünnte wässrige Essig- oder Salzsäure gegeben wird. Dabei erfolgt eine elektropositive Umladung der Gelatinemolekeln, verbunden mit einer Abscheidung des flüssigen, die Kapselwand bildenden Komplexkoazervates. Beim Abkühlen der Mischung von 50°C auf 6 bis 8°C tritt Gelatinisierung bzw. Verfestigung der Kapselwandung ein. Eine zusätzliche chemische Härtung der Kapselwände durch Vernetzung der Gelatine mittels Formaldehyd oder Glutardialdehyd führt zu stabilen Kapseldispersionen. Dieses Verfahren wird ausführlich in der US—A—2 800 457 beschrieben. Es kann entsprechende Anwendung zur Einkapselung des sauren Reaktionspartners des Farbbildners finden.

Es gibt aber auch, wie bereits angedeutet, Verfahren, bei denen die Mikrokapseln mit einer umschlossenen Lösung eines Reaktionsparameters eines Farbreaktionssystems ohne Koazervation, allein durch Zumischen eines mit Wasser nicht-mischbaren öligen Materials, einer Lösung mindestens eines thermoplastischen Harzes und Wasser hergestellt werden. Das Wasser bewirkt dabei die Ausscheidung des Harzes aus der Lösung in Form fester Teilchen um einen Kern des genannten öligen Materials. Dieses Verfahren wird in der US—A—3 418 250 beschrieben. Weitere für die Erfindung relevante Einkapselungsverfahren gehen aus den DE—A—2 940 786 sowie DE—A—2 652 875 hervor.

Bei dem aus der DE—A—2 940 786 bekannten Verfahren wird die Kondensation von Melamin-Formaldehyd-Vorkondensaten und/oder deren $C_1$—$C_4$-Alkylethern in Wasser genutzt, indem das im wesentlichen wasserunlösliche, den Kern der Mikrokapseln später bildende Material dispergiert ist. Die Kondensation erfolgt in Gegenwart von gelösten Polymeren, die negativ geladene ionische Gruppen enthalten, bei pH-Werten von 3 bis 6,5 und Temperaturen von 20 bis 100°C. Das besondere Kennzeichen dieses Verfahrens besteht darin, daß das in Wasser gelöste Polymere ein Sulfonsäuregruppen tragendes Homo- oder Copolymerisat ist, das keine Phenyl- und/oder Sulfophenylgruppen aufweist, und das einen K-Wert nach Fikentscher von 100 bis 170 sowie eine Viskosität von 200 bis 500 mPas bei einem Schergefälle von 489 $s^{-1}$ (gemessen in 20 gew.-%iger Lösung bei 20°C) hat, und das Melamin-Formaldehyd-Vorkondensat nach Maßgabe der Kondensation kontinuierlich oder in Portionen zugegeben wird. Dieses Verfahren ist leicht steuerbar. So kann durch einfache Reihenversuche die optimal benötigte Menge an dem wasserlöslichen Polymeren leicht ermittelt werden.

Mit Vorteil läßt sich im Rahmen der Erfindung auch das in der EP—B—0 016 366 beschriebene Verfahren heranziehen, dessen spezieller Anwendungsfall die Herstellung von die Lösung eines Farbbildners enthaltenden Mikrokapseln betrifft. Hierbei wird eine Lösung des Farbbildners in einem organischen Lösungsmittel von Kapseln aus einem Polyadditionsprodukt eines speziellen Diisocyanats und eines Diamins umhüllt. Zuerst wird unter Erwärmen und unter Rühren ein geeignetes Diisocyanat zu einer Lösung eines Farbbildners in einem aromatischen Lösungsmittel gegeben. Diese organische Phase wird dann in eine wässrige Polyvinylalkohollösung gegeben und an einer Ultraschallpfeife emulgiert. Unter Rühren wird dieser Emulsion eine verdünnte wässrige Aminlösung zugefügt. Die Menge des Amins und des Diisocyanats stehen in stöchiometrischen Verhältnis. Nach der Zugabe des Amins wird noch eine geweisse Zeit bei Raumtemperatur und darauf bei erhöhter Temperatur nachgerührt.

Es versteht sich von selbst, daß die vorstehend detailliert beschriebenen Verfahren auch Modifikationen unterliegen können, die dem Fachmann geläufig sind, ohne daß ihre Eignung für die Zwecke der Erfindung beeinträchtigt wäre. Auch könnten andere, vorstehend nicht beschriebene Verfahren, für die Zwecke der Erfindung geeignet sein, sofern sie gewährleisten, daß die mehr oder weniger stark übersättigte frische Lösung der Reaktionspartner von Farbreaktionssystemen, insbesondere Farbreaktionspapieren, in einer so kurzen Zeitspanne eingekapselt bzw. umhüllt wird, daß störende vorzeitige Auskristallisationen der gelösten Reaktionspartner von Einkapselung weitestgehend ausgeschlossen sind. Als Richtlinie für die Zeitdauer zwischen Herstellung der übersättigten Lösung und Ausbildung der einzelnen Tröpfchen des zu umkapselnden Mediums mit beginnender Umhüllung kann eine Zeit von etwa 1 bis 60 Sekunden angegeben werden. Bei optimaler Verfahrensführung kann diese Zeit sogar noch unterschritten werden, was von Vorteil ist. Begünstigt wird eine kurzzeitige Verfahrensführung dadurch, daß z.B. die Vermischung der Ausgangsmaterialien, einerseits die möglichst hochkonzentrierte Lösung des jeweiligen Reaktionspartners und andererseits dessen Nichtlöser, in einem Schnellmischer, wie z.B. einen stationären Rohrmischer, der unmittelbar vor dem eigentlichen Emulgierapparat stationiert ist, durchgeführt wird. Der zeitbestimmende Schritt des gesamten Verfahrens läge dann lediglich noch in der Einkapselungsmethode. Die üblichen Einkapselungsverfahren gewährleisten regelmäßig eine schnelle Endverfahrensführung. Hierunter wird das Koazervationsverfahren bevorzugt.

Der nicht zu erwartende vorteilhafte Effekt, der mit den erfindungsgemäßen Maßnahmen erzielbar ist, könnte wie folgt erklärt werden: Durch das rasche Emulgieren mit nachfolgendem Einkapseln der frischen übersättigten Lösung des Reaktionspartners, insbesondere des Farbbildners für Farbreaktionspapiere, mit einem hohen Nichtlöseranteil wird der Kristallisationsvorgang innerhalb der Kapseln weitgehend ausgeschlossen. Dies könnte beispielweise darauf zurückgehen, daß die Keimbildungskräfte innerhalb der Kapseln bzw. auf den Kapselinnenwänden nicht ausreichen. Andererseits könnten wohl dennoch Kristallisationsvorgänge ablaufen, diese aber zu fein kristallinen bzw. kolloiddispersen Ausfällungen führen, die praktisch einer Moleculardispersion entsprechen, wobei sich dieser Dispersionszustand beim späteren praktischen Gebrauch, so z.B. von Kapseln mit einem Gehalt einer Lösung eines Farbbildners in Farbreaktionspapieren beim Schreibvorgang, nicht nachteilig auswirkt. Oben wurde, das sei betont, lediglich ein möglicher Wirkungsmechanismus technologisch erklärt. Es soll hierin keinerlei Bindung gesehen werden. Vielmehr könnten auch andere Wirkungsmechanismen eine Rolle spielen. Tatsache ist allerdings, daß entgegen der gefestigten Fachmeinung ein technisch vorteilhafter und insbesondere wirtschaftlich günstiger Weg der Heranziehung billiger Nichtlöser nunmehr erfindungsgemäß beschritten werden kann. Dieser Erfolg wird auch nicht dadurch beeinträchtigt, indem zusätzlich übliche Additive mit eingekapselt werden.

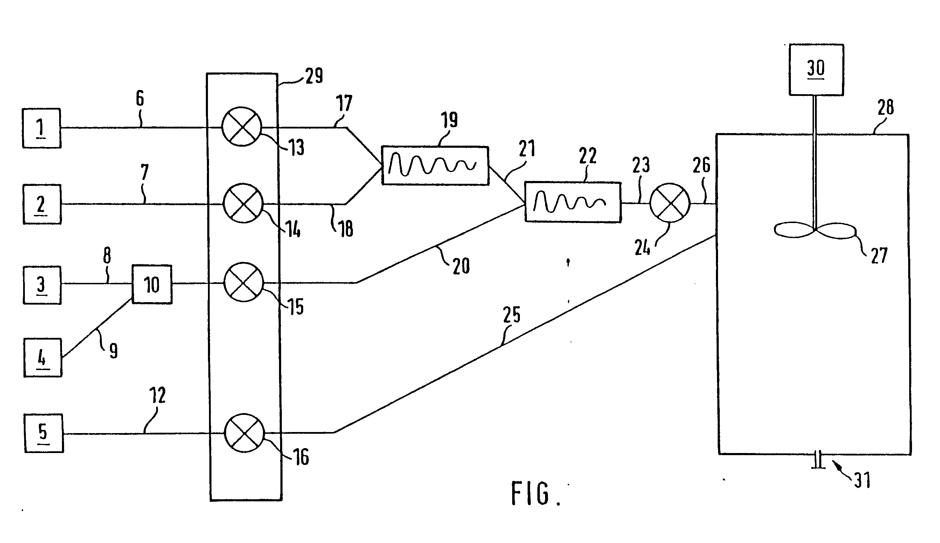

Die Erfindung soll nachfolgend anhand einer Figur sowie verschiedener Beispiele noch näher erläutert werden. Die beigefügte Figur zeigt schematisch eine Anlage, mit der das erfindungsgemäße Verfahren durchführbar ist. Hierbei wird auf die Einkapselung eines Farbbildners für Farbreaktionspapiere Bezug genommen. Entsprechendes gilt selbstverständlich auch für den sauren Reaktionspartner des Farbbildners. Grundsätzlich kann das erfindungsgemäße Verfahren jedoch auch für andere zu lösende und einzukapselnde Substanzen herangezogen werden.

Nach der Figur befindet sich eine Lösung von Kristallviolettlakton in Isopropylbiphenyl (aromatisches Lösungsmittel) im Behälter 1, während Leuchtöl (aliphatisches bzw. nicht-aromatisches Lösungsmittel) im Behälter 2 vorliegt. Im Behälter 3 befindet sich eine wässrige kolloidale Gelatinelösung, die später das Wandmaterial der Kapsel aufbaut. Im Behälter 4 befindet sich als wässrige Gummiarabicum-Lösung die zweite kolloidale Komponente. Die Farbbildnerlösung des Behälters 1 tritt über die Leitung 6 in den Pumpenkopf 13 des Dosiersystems 29 (Dosierpumpe) ein. Das Dosiersystem 29 weist neben dem Pumpenkopf 13 noch weitere Pumpenköpfe 14, 15 und 16 auf. Der Nichtlöser des Behälters 2 wird dem Pumpenkopf 14 über die Leitung 7 zugeleitet. Von den Pumpenköpfen 13 bzw. 14 gelangen die erwähnten Materialien der Behälter 1 und 2 über Leitungen 17 bzw. 18 in den statischen Rohrmischer 19. Der Rohrmischer 19 stellt ein Strömungsrohr dar. Die Förderleistung des Pumpenkopfes 13 wird so eingeregelt, daß das Mischungsverhältnis von Leuchtöl zur Farbbildnerlösung in dem frisch hergestellten Lösungsmittelgemisch 3:1 (Gewichtsverhältnis) beträgt.

Dieses Gemisch wird einem weiteren statischen Rohrmischer 22 über die Leitung 21 zugeleitet. Gleichzeitig wird dem statischen Rohrmischer 22 über die Leitung 20 das Kapselwandmaterial über den Pumpenkopf 15 des Dosiersystems 29 zugespeist. Hierbei handelt es sich um eine Mischung aus Gelatine- und Gummiarabicum-Lösungen aus den Behältern 3 und 4, die über die Leitungen 8 und 9 im Behälter 10 homogen gemischt werden. Das Gemisch wird darauf in der erwähnten Weise weitergeleitet.

Die in dem Schnellmischer 22 gebildete grobe Emulsion wird über eine Leitung 23 sowie über ein Feinemulgiergerät 24 sowie eine Leitung 26 dem Koazervierungshälter 28 zugeleitet. Gleichzeitig werden zur Koazervierung erforderliche Additive aus dem Behälter 5 über die Leitung 12, den Pumpenkopf 16 des Dosiersystems 29 und die Leitung 25 in den Koazervierungsbehälter 28 eingeführt. Hierbei handelt es sich um die die Koazervation einleitende wässrige Säurelösung. In dem Koazervierungsbehälter 28 mit Rührer 27 stellt sich zunächst ein System ein, bei dem das Kapselwandmaterial noch flüssig ist, aber bereits eine flüssige Umhüllung der einzukapselnden Tröpfchen vorliegt. Die Zeit zur Ausbildung der flüssigen Kapselumhüllung beträgt nur wenige Sekunden, z.B. 15 Sekunden.

Nach Verlassen des Koazervierungsbehälters 28 über den Auslaß 31 wird die entnommene Masse von 50°C auf etwa 6 bis 8°C abgekühlt. Das Kapselwandmaterial erstarrt aufgrund dieser Abkühlung. Um den Kapselwänden der gebildeten Kapseln eines Durchmessers von etwa 3 bis 10 µm irreversibel die gewünschte Härte zu verleihen, wird die erhaltene Kapseldispersion z.B. mittels einer Formalinlösung in bekannter Weise gehärtet. Die Vorrichtungen, die zu dieser Abkühlung und Härtung herangezogen werden, sind in der beschriebenen Figur nicht gezeigt.

Vorrichtungen dieser Art sind bekannt.

Verfahren der oben beschriebenen Art sind bekannt und in der Literatur vielfältig beschrieben, so z.B. in der US—A—2 800 457.

Nachfolgend soll die Erfindung anhand verschiedener Beispiele noch näher erläutert werden. Die darin genannten Materialien werden entsprechend der vorstehend beschriebenen Verfahrensweise, insbesondere der im Zusammenhang mit der obigen Figurenbeschreibung erläuterten, behandelt. In den Beispielen wird daher lediglich die Zusammensetzung der einzukapselnden Lösung in Form eines Öls detailliert angegeben.

## Beispiel 1

Einzukapselndes Öl:

2% Kristallviolettlakton,
0,6% N-Benzoylleukomethylenblau,
28% teilhydriertes Terphenyl (Santosol 340)
69,4% aliphatisches Kohlenwasserstofföl (Shellsol® H von Shell)

100,0%

## Beispiel 2

Einzukapselndes Öl:

2% Kristallviolettlakton,
0,6% N-Benzoylleukomethylenblau,
40% Diisopropylnaphthalin,
57,4% technisches Weißöl (paraffinischer Prozeßöltyp) (Energol WT 1)

100,0%

## Beispiel 3

Einzukapselndes Öl:

2,2% 3-Methylspiro-dinaphthopyran,
0,5% N-Benzylleukomethylenblau,
25,0% Isopropylbiphenyl (Tanacol PSG),
72,3% entaromatisiertes, synthetisches Kohlenwasserstofföl (Exxsol® D 200/240 von Esso)

100,0%

## Beispiel 4

Einzukapselndes Öl:

5% Farbbildnergemisch, schwarz reagierend*
15% Isopropylbiphenyl (Tanacol PSG),
80% synthetisches Kohlenwasserstofföl (Exxsol® D 240/270 von Esso)

100,0%

| *) 2-Oktylamino-6-diethylamino-fluoran | 3,0% |
| N-Benzoylleukomethylenblau | 1,2% |
| Kristallviolettlakton | 0,3% |
| 2-Isobutyl-6-diethylamino-fluoran | 0,3% |
| Bis-[N-Oktyl-2-methyl-indolino-(3)]-phthalid | 0,2% |
| | 5,0% |

## Patentansprüche

1. Verfahren zum Einkapseln eines in einer wässrigen Emulsion vorliegenden Lösung eines Reaktionspartners von Farbreaktionssystemen, durch übliche Mikroeinkapselungsverfahren, wobei der Reaktionspartner zunächst in einem Lösungsmittel mit für ihn gutem Lösungsvermögen gelöst und der hierdurch erhaltenen Lösung ein Nichtlöser, der den Reaktionspartner allenfalls unwesentlich löst, beigemischt und diese Lösung durch Mischen mit einer wässrigen Phase in eine wässrige Emulsion überführt und hiermit das Mikroeinkapselungsverfahren durchgeführt wird, dadurch gekennzeichnet, daß der mit dem Lösungsmittel guten Lösungsvermögens erhaltenen Lösung unter schnellem Mischen ein Nichtlöser in einer eine übersättigte Lösung einstellenden Menge beigemischt und die übersättigte Lösung unmittelbar danach unter schnellem Mischen in der wässrigen Phase emulgiert wird und danach eingekapselt wird, bevor eine vorzeitige störende Auskristallisation des gelösten Reaktionspartners eingetreten ist.

2. Verfahren nach Anspruch 1, dadurch gekennzeichnet, daß als Lösungsmittel guten Lösungsvermögens aromatische Lösungsmittel und/oder chlorierte Paraffine verwendet werden.

3. Verfahren nach Anspruch 2, dadurch gekennzeichnet, daß als aromatisches Lösungsmittel alkyliertes Biphenyl, alkyliertes Naphthalin, alkyliertes Terphenyl und/oder eine Diarylalkanverbindung verwendet wird.

4. Verfahren nach einem der Ansprüche 1 bis 3, dadurch gekennzeichnet, daß als Nichtlöser ein nicht-aromatisches Lösungsmittel verwendet wird.

5. Verfahren nach Anspruch 4, dadurch gekennzeichnet, daß als nicht-aromatisches Lösungsmittel aliphatische und/oder cycloaliphatische Lösungsmittel verwendet werden.

6. Verfahren nach einem der Ansprüche 2 bis 4, dadurch gekennzeichnet, daß das aromatische Lösungsmittel bzw. das chlorierte Paraffin und der Nichtlöser in Form des nicht-aromatischen Lösungsmittels in einem Gewichtsmischungsverhältnis von nicht mehr als 1:1 verwendet werden.

7. Verfahren nach einem der Ansprüche 1 bis 6, dadurch gekennzeichnet, daß der Reaktionspartner in Form des basischen Farbbildners des Farbreaktionssystems eingekapselt wird.

8. Verfahren nach Anspruch 7, dadurch gekennzeichnet, daß als Farbbildner Laktonderivate, Fluoranderivate, Phthalidderivate, Diphenylmethanderivate, Triphenylmethanderivate und/oder Spiropyranderivate eingesetzt werden.

9. Verfahren nach Anspruch 7 oder 8, dadurch gekennzeichnet, daß zusätzlich N-Benzoylleukomethylenblau und/oder N-Alkyl-carbazolyl-diphenylmethanderivate eingesetzt werden.

10. Verfahren nach einem der Ansprüche 1 bis 6, dadurch gekennzeichnet, daß der saure Reaktionspartner des basischen Farbbildners des Farbreaktionssystems eingekapselt wird.

11. Verfahren nach Anspruch 10, dadurch gekennzeichnet, daß als saurer Reaktionspartner eine saure phenolische Verbindung eingekapselt wird.

12. Verfahren nach einem der Ansprüche 1 bis 11, dadurch gekennzeichnet, daß zur Einkapselung das Koazervierungsverfahren angewandt wird.

13. Kapseln, erhältlich nach einem Verfahren gemäß einem der Ansprüche 1 bis 12.

14. Verwendung der Kapseln nach Anspruch 13 mit einer eingekapselten Lösung eines basischen Farbbildners, der durch die Reaktion mit sauren Reaktionspartnern eine Farbe liefert, in Farbreaktionspapieren.

**Revendications**

1. Procédé d'encapsulage d'une solution, présente dans une émulsion aqueuse, d'un partenaire réactionnel de systèmes à réaction colorée, par des opérations classiques de micro-encapsulage, le partenaire réactionnel étant tout d'abord dissous dans un solvant doué, vis-à-vis de lui, d'un bon pouvoir de dissolution, et la solution ainsi obtenue est additionnée d'un non-solvant qui dissout tout au plus une très faible quantité de partenaire réactionnel et cette solution est transformée par mélange avec une phase aqueuse en une émulsion aqueuse et, ce faisant, l'opération de micro-encapsulage est effectuée, caractérisé en ce qu'on ajoute à la solution obtenue avec le solvant à bon pouvoir de dissolution, en agitant rapidement, un non-solvant en une quantité donnant une solution sursaturée, et la solution sursaturée est émulsionnée immédiatement après, sous agitation rapide, dans la phase aqueuse, puis elle est encapsulée avant qu'une cristallisation gênante prématurée du partenaire réactionnel dissous ne soit amorcée.

2. Procédé suivant la revendication 1, caractérisé en ce qu'on utilise comme solvants à bon pouvoir de dissolution des solvants aromatiques et/ou des paraffines chlorées.

3. Procédé suivant la revendication 2, caractérisé en ce qu'on utilise comme solvant aromatique du biphényle alkylé, du naphtalène alkylé, du terphényle alkylé et/ou un composé du type diarylalcane.

4. Procédé suivant l'une des revendications 1 à 3, caractérisé en ce qu'on utilise comme non-solvant un solvant non aromatique.

5. Procédé suivant la revendication 4, caractérisé en ce qu'on utilise comme solvant non aromatique des solvants aliphatiques et/ou cycloaliphatiques.

6. Procédé suivant l'une des revendications 2 à 4, caractérisé en ce que le solvant aromatique ou la paraffine chlorée et le non-solvant sont utilisés sous la forme du solvant non aromatique dans un rapport de mélange en poids de moins de 1:1.

7. Procédé suivant l'une des revendications 1 à 6, caractérisé en ce que le partenaire réactionnel est encapsulé sous la forme du chromogène basique du système à réaction colorée.

8. Procédé suivant la revendication 7, caractérisé en ce qu'on utilise comme chromogènes des dérivés de lactone, des dérivés de fluorane, des dérivés de phtalide, des dérivés de diphénylméthane, des dérivés de triphénylméthane et/ou des dérivés de spiropyranne.

9. Procédé suivant la revendication 7 ou 8, caractérisé en ce qu'on utilise en outre du bleu de N-benzoylleucométhylène et/ou des dérivés du type N-alkyl-carbazolyldiphénylméthane.

10. Procédé suivant l'une des revendications 1 à 6, caractérisé en ce que la substance qui est encapsulée est le partenaire réactionnel acide du chromogène basique du système à réaction colorée.

11. Procédé suivant la revendication 10, caractérisé en ce qu'on encapsule comme partenaire réactionnel acide un composé phénolique acide.

12. Procédé suivant l'une des revendications 1 à 11, caractérisé en ce qu'on utilise pour l'encapsulage le procédé de coacervation.

13. Capsules pouvant être obtenues par un procédé suivant l'une des revendications 1 à 12.

## EP 0 160 783 B2

14. Utilisation des capsules suivant la revendication 13 avec une solution encapsulée d'un chromogène basique qui donne une couleur par réaction avec des partenaires réactionnels acides, dans des papiers copiants.

**Claims**

1. A process for encapsulating a solution, present in an aqueous emulsion, of a reaction partner of colour reaction systems by ordinary micro-encapsulation methods, wherein the reaction partner is first dissolved in a solvent with good dissolving capacity for it and a non-solvent, which at most inappreciably dissolves the reaction partner, is admixed with the solvent thereby obtained, and this solution is converted by mixing with an aqueous phase into an aqueous emulsion and the micro-encapsulation process is carried out therewith, characterised in that a non-solvent, in a quantity adjusting a super-saturated solution, is admixed with rapid mixing with the solution obtained with the solvent of good dissolving capacity, and the super-saturated solution is immediately thereafter emulsified in the aqueous phase with rapid mixing and thereafter is encapsulated, before a premature troublesome crystallising-out of the dissolved reaction partner has taken place.

2. A process according to Claim 1, characterised in that aromatic solvents and/or chlorinated paraffin are used as solvents of good dissolving capacity.

3. A process according to Claim 2, characterised in that alkylated biphenyl, alkylated naphthalene, alkylated terphenyl and/or a diaryl alkane compound is used as aromatic solvent.

4. A process according to any one of Claims 1 to 3, characterised in that a non-aromatic solvent is used as non-solvent.

5. A process according to Claim 4, characterised in that aliphatic and/or cycloaliphatic solvents are used as non-aromatic solvent.

6. A process according to any one of Claims 2 to 4, characterised in that the aromatic solvent or the chlorinated paraffin and the non-solvent in the form of the non-aromatic solvent are used in a mixture having a ratio by weight of not more than 1:1.

7. A process according to any one of Claims 1 to 6, characterised in that the reaction partner is encapsulated in the form of the basic colour former of the colour reaction system.

8. A process according to Claim 7, characterised in that lactone derivatives, fluorane derivatives, phthalide derivatives, diphenyl methane derivatives, triphenyl methane derivatives and/or spiropyrane derivatives are used as colour formers.

9. A process according to Claim 7 or 8, characterised in that N-benzoyl leuco-methylene blue and/or N-alkyl-carbazolyl-diphenyl methane derivatives are additionally used.

10. A process according to any one of Claims 1 to 6, characterised in that the acid reaction partner of the basic colour former of the colour reaction system is encapsulated.

11. A process according to Claim 10, characterised in that an acid phenolic compound is encapsulated as acid reaction partner.

12. A process according to any one of Claims 1 to 11, characterised in that the coacervation process is used for the encapsulation.

13. Capsules obtainable by a process according to any one of Claims 1 to 12.

14. The use of capsules according to Claim 13 with an encapsulated solution of a basic colour former which by the reaction with acid reaction partners delivers a colour, in colour reaction papers.

9

FIG.

EP 0 160 783 B2